# FASCICULE DE BREVET EUROPEEN

(11) **EP 2 091 317 B1**
(45) Date de publication et mention de la délivrance du brevet: **23.05.2012**
(21) Numéro de dépôt: 07857393.8
(22) Date de dépôt: 11.12.2007
(51) Int. Cl.: A01D 46/26

(54) **APPAREIL À MAIN POUR LA RÉCOLTE MÉCANIQUE DES FRUITS PAR GAULAGE**
TRAGBARE VORRICHTUNG FÜR MECHANISCHE BAUMRÜTTELERNTE VON FRÜCHTEN
HAND-HELD DEVICE FOR THE MECHANICAL TREE-BEATING HARVEST OF FRUITS

(30) Priorité: 11.12.2006 FR 0610769; 11.12.2006 FR 0610771; 20.06.2007 FR 0704415
(43) Date de publication de la demande: 26.08.2009
(73) Titulaire: Infaco S.A.S, 81140 Cahuzac sur Vère (FR)
(72) Inventeur: DELMAS, Daniel, 81140 Cahuzac sur Vère (FR)
(74) Mandataire: Ravina, Bernard
(86) Numéro de dépôt international: PCT/EP2007/063706
(87) Numéro de publication internationale: WO 2008/071702

(56) Documents cités:
- EP-A- 1 671 531
- WO-A-03/030625
- DE-C1- 19 833 790
- FR-A- 2 125 298
- GR-A- 97 100 436

## Description

### Domaine technique

La présente invention est du domaine des appareils utilisés en agriculture pour la cueillette mécanique des fruits tels qu'olives, noix et autres par gaulage.

Plus précisément, la présente invention se rapporte à un appareil à main pour la récolte mécanique des fruits apte à imprimer à la ramure des arbres, un mouvement de secouage sous l'effet duquel les fruits sont amenés à se détacher des branches qui les portent.

### Etat de la technique antérieure

On connaît de l'état de la technique antérieure des appareils à main, constitué d'un manche allongé tubulaire doté en extrémité proximale d'une poignée de préhension et en extrémité distale d'une tête de cueillette formée d'un corps oscillant portant une pluralité de batteurs adaptés à pénétrer dans la frondaison et à imprimer localement aux branches un mouvement de secouage sous l'effet duquel les fruits sont amenés à se séparer de ses dernières.

Ainsi on connaît du FR-A-2 125 298 une machine à récolter les fruits comprenant une tête de battage constituée d'un support pivotant autour d'un axe horizontal auquel sont fixés plusieurs batteurs.

On connaît également du GR-A-97100436 un appareil pour la cueillette des olives. Selon ce document, la tête de cueillette est montée sur rotule et chaque batteur par son axe central est amené à décrire une surface conique afin que la ramure soit localement secouée selon plusieurs directions. Il est apparu qu'une telle façon d'opérer améliore l'efficacité du gaulage. La tête de secouage du dispositif selon ce brevet comprend une platine de tête à laquelle sont fixés les batteurs. Cette platine de tête est montée sur une rotule engagée par sa bague interne sur un arbre rotatif de transmission de mouvement équipé sous la rotule d'un plateau incliné portant plusieurs galets périphériques amenés en appui contre la face inférieure de la platine de tête. La platine de tête est par ailleurs solidarisée au corps de tête par une gaine tubulaire s'opposant au mouvement de rotation de la platine de tête autour de la rotule, ce corps de tête étant solidaire de l'extrémité distale du manche de l'appareil. La rotation de l'arbre de transmission entraîne la rotation du plateau incliné. Les galets en roulant sur la face inférieure de la platine de tête impriment à ladite platine un mouvement oscillant autour de la rotule afin que les batteurs par leur axe central longitudinal décrivent une surface conique.

L'état de la technique est également illustré par la demande de brevet, WO 03/0330625.

Cette demande de brevet montre un appareil à main dont la tête de secouage comprend un support comportant plusieurs batteurs de secouage disposés de manière parallèle. Le support est animé d'un mouvement tel que l'axe longitudinal de chaque batteur est assujetti à décrire une surface conique.

La demande de brevet EP-A-1 671 531 montre également un appareil à main dont la tête de secouage comporte un carter fixe et des batteurs montés de manière inclinée sur des supports individuels entraînés en rotation autour d'un axe parallèle à l'axe longitudinal du manche allongé par un mécanisme commun d'entraînement des supports de batteur et de synchronisation afin de maintenir dans le temps leurs décalages de phase. Avec une telle configuration, chaque batteur, par son axe longitudinal, est animé d'un mouvement conique.

La demande de brevet EP 1 795 064 montre un appareil à main pour la récolte des olives des fruits et autres. Cet appareil à main comporte deux peignes superposés animés chacun d'un mouvement de battage, les battons de chaque peigne décrivant un mouvement pendulaire conique à base elliptique.

### Exposé de l'invention

### Problème technique

Il est apparu qu'un simple mouvement de battage comme l'enseigne le FR 2 125 298 se révèle insuffisant pour assurer un gaulage efficace.

Cet inconvénient ne se retrouve pas dans les appareils selon les GR 97100436, WO 03/0330625, EP-A-1 671 531 et EP 1 795 064 en raison du fait que les peignes et plus précisément les peignes de ces derniers sont animés d'un mouvement pendulaire conique à base circulaire. Le principal avantage de ce type de mouvement réside dans le rendement élevé obtenu en termes de cueillette. Cependant ces derniers présentent un certain nombre d'inconvénients parmi lesquels on peut citer l'absence de réglage de l'amplitude du mouvement de battage et pour certains d'entre eux une réalisation relativement complexe et coûteuse.

Un autre inconvénient propre aux appareils selon les GR 97100436, WO 03/0330625 et EP-A-1 671 531 et au mouvement pendulaire conique à base circulaire des batteurs tient au fait que ces derniers projettent les fruits dans toutes les directions de sorte qu'une grande partie des ces derniers tombent en dehors des filets de récupération disposés préalablement sous les arbres pour recevoir la récolte. Il est également apparu que ce type de mouvement conduit à une casse importante des rameaux. Or les rameaux sont les terminaisons des branches sur lesquelles se formeront ultérieurement les bourgeons. Ainsi une casse importante de ces rameaux se traduira, la saison suivante, par une perte de fructification.

Un autre inconvénient réside dans le fait que le mouvement de secouage de la tête est imprimé de manière imparfaite par les batteurs à la ramure. Ceci tient au fait que les trajectoires des batteurs ne se recouvrent pas ou ne se recouvrent qu'en zone distale de sorte qu'entre cette zone et le support des batteurs subsiste des zones mortes dans lesquelles la ramure n'est pas secouée ou faiblement secouée. La transmission imparfaite du mouvement de secouage tient également au fait que la ramure, dans une disposition de batteurs parallèles est dispersée dans le peigne formé par le support et les batteurs, alors que la zone de plus grande efficacité en termes d'efforts de secouage disponibles, se situe à proximité du centre de la rotule, c'est-à-dire dans la zone proximale des batteurs. En revanche, en zone distale, l'effort maximal disponible est moindre.

Ces inconvénients pris de manière indépendante ou combinée se traduisent par un rendement de récolte relativement bas et par une augmentation de la consommation énergétique de l'appareil.

### Solution technique

La présente invention a pour objet de résoudre les problèmes sus évoqués en mettant en oeuvre un appareil du type précité d'une conception simple autorisant le réglage de l'amplitude du mouvement de battage.

Un autre objet de la présente invention est la mise en oeuvre d'un appareil à main du type précité pour lequel le mouvement de battage est orienté et préserve les rameaux sans pour autant nuire au rendement de l'opération de cueillette.

Un autre objet de la présente invention est de réduire l'importance des zones mortes et conjointement d'améliorer le rendement de la récolte tout en diminuant la consommation énergétique, en concentrant la masse à secouer au plus prés du centre instantané de rotation.

À cet effet, l'appareil à main selon l'invention, pour la récolte mécanique des fruits par gaulage, comportant un manche allongé tubulaire, destiné à être saisi à la main, recevant en extrémité distale une tête de cueillette comprenant un corps de tête fixé au manche portant un élément oscillant de tête prévu pour recevoir un élément de battage formé d'un corps support et d'au moins un batteur longiforme fixé par son extrémité inférieure au corps support, ledit élément osçillant de tête étant en prise avec un mécanisme d'actionnement qui lui imprime un mouvement pendulaire conique tel que l'axe longitudinal de chaque batteur décrive une surface conique, ledit mécanisme d'actionnement comprenant un arbre de transmission monté en rotation dans le manche tubulaire, accouplé par son extrémité proximale à un moteur d'entraînement et par son extrémité distale à une transmission de mouvement en prise avec l'élément oscillant de tête, se caractérise essentiellement en ce que l'élément oscillant de tête est porté par une rotule solidaire du corps de tête et que la transmission de mouvement comprend d'une part un levier fixé à l'arbre de transmission s'étendant de manière radiale par rapport à ce dernier et d'autre part un doigt solidarisé d'une part à l'élément oscillant de tête et d'autre part au levier radial en un point distant de l'axe géométrique de rotation de l'arbre d'entraînement.

Une telle disposition présente l'avantage d'une grande simplicité et d'un entretien moindre.

Selon une autre caractéristique de l'invention, le levier radial comporte au moins un perçage et la tige de transmission est engagée dans le ou l'un des perçages.

Selon une autre caractéristique de l'invention, le levier radial comporte un perçage et ce perçage se présente sous la forme d'une lumière oblongue.

Selon une autre caractéristique de l'invention, sont prévues deux butées engagées dans la lumière oblongue de part et d'autre la tige de transmission et déterminant la position de cette dernière dans ladite lumière.

Selon une autre caractéristique de l'invention, l'appareil est équipé de plusieurs éléments oscillants associés chacun à une transmission de mouvement qui lui est propre.

Une telle disposition est propre à améliorer l'efficacité du gaulage.

Selon une autre caractéristique de l'invention, l'un au moins des batteurs est animé d'un mouvement pendulaire conique à base elliptique.

La position du grand axe de l'ellipse détermine la direction privilégiée de projection des fruits, grâce à quoi par orientation correcte de l'appareil, la majeure partie des fruits cueillis pourra tomber dans le filet de récupération. Cette disposition limite donc les projections latérales en dehors du filet. En outre une telle disposition est de nature à limiter la casse des ramures et des feuilles et préserve la fructification future.

Selon une autre caractéristique de l'invention, les batteurs sont fixés sur leur support de manière à converger vers ce dernier et former une disposition en entonnoir ou en éventail propre à recueillir une masse végétale relativement importante et à rassembler cette au plus près du centre de la rotule. Ainsi les extrémités distales des batteurs sont plus écartées les unes des autres que leurs extrémités proximales. La forme en entonnoir ou en éventail permet, lors de la pénétration des batteurs dans la ramure, de rassembler dans les zones médianes et proximales une masse végétale importante apte à combler l'intervalle entre les batteurs. Pour cette raison, le mouvement des batteurs se trouve transmis à cette masse végétale de manière plus complète que pour les dispositions antérieures, ce qui améliore le rendement de la récolte. De surcroît en ramenant cette masse végétale à faible distance du centre de la rotule, est amélioré grandement l'efficacité du gaulage et ce en réduisant la consommation énergétique.

Selon une autre caractéristique de l'invention, chaque batteur, par rapport à un axe géométrique attaché au support présente une inclinaison différente de celle que présente chaque autre batteur par rapport à ce même axe et les trajectoires des mouvements des batteurs contigus se recouvrent au moins partiellement ce qui diminue l'importance des zones mortes et accroît encore de manière significative l'efficacité de l'opération de gaulage.

Selon une autre caractéristique de l'invention, les extrémités distales des batteurs, depuis les batteurs périphériques vers les batteurs centraux, sont situées selon des niveaux de hauteur décroissants. Cette disposition facilite la pénétration des batteurs dans la ramure et diminue pour ce qui concerne les batteurs non périphériques, l'effet de projection des fruits, de sorte que ces derniers tombent en grande majorité sur une zone de réception dédiée, se développant autour de l'arbre, cette zone étant dans la pratique constituée par une bâche posée à même le sol.

Selon une autre caractéristique de l'invention, le support porte deux séries de batteurs de secouage, les deux séries de batteurs, par les axes longitudinaux des batteurs étant disposées selon deux plans géométriques sécants formant entre eux un angle aigu et les batteurs de chaque série sont disposés en regard des intervalles séparant les batteurs de l'autre série Cette disposition est propre à améliorer encore l'efficacité du gaulage en réduisant l'importance des zones mortes.

Selon encore une autre caractéristique de l'invention, la première série est composée de batteurs de longueur supérieure à celle des batteurs de la seconde série.

Cette disposition permet de limiter l'action des batteurs de la seconde série aux zones mortes tout en limitant l'importance des masses en mouvement ce qui diminue la consommation énergétique.

Selon encore une autre caractéristique de l'invention, les extrémités distales des batteurs de la première série, depuis les batteurs périphériques vers les batteurs centraux, sont situées selon des niveaux de hauteur décroissants.

Selon encore une autre caractéristique de l'invention, les extrémités distales des batteurs de la seconde série sont situées selon un même niveau de hauteur.

### Description sommaire des figures et des dessins

D'autres avantages, buts et caractéristiques de l'invention, apparaîtront à la lecture de la description d'une forme préférée de réalisation, donnée à titre d'exemple non limitatif, en se référant aux dessins annexés en lesquels :
- la figure 1 est une vue en plan d'un appareil selon l'invention,
- la figure 2 est une vue en coupe longitudinale de la tête de cueillette selon l'invention,

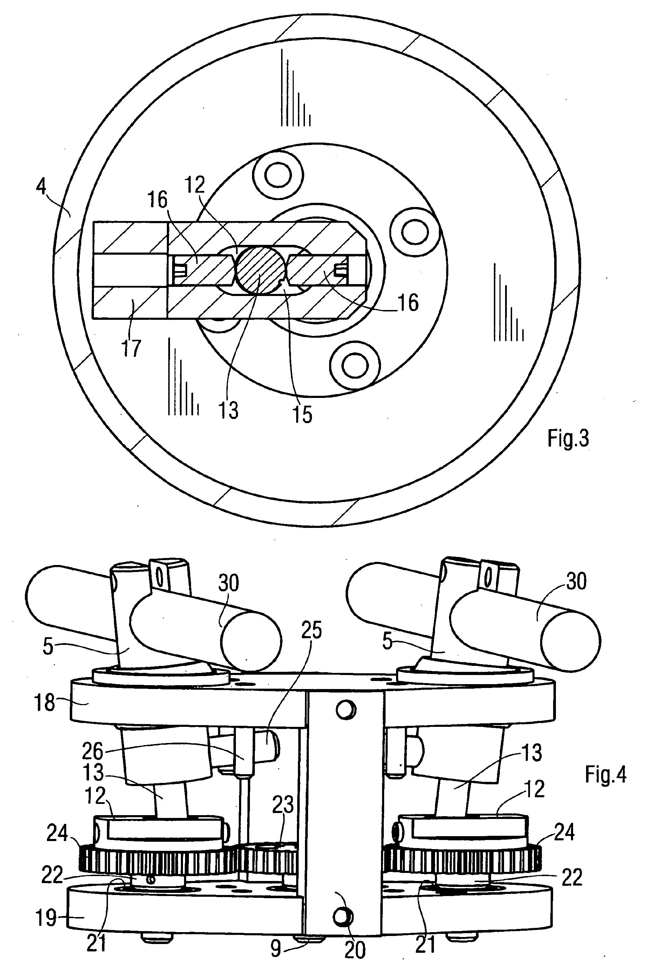

- la figure 3 est une vue en coupe selon la ligne AA de la figure 3,
- la figure 4 est une vue en coupe longitudinale d'une tête de cueillette comportant deux éléments oscillants de battage,
- la figure 5 est une vue en perspective d'un ensemble de battage selon une première forme de réalisation,
- la figure 6 est une vue est une vue de face d'un ensemble de battage la figure 5,
- la figure 7 est une vue de profil d'un ensemble de battage selon la figure 5,
- la figure 7a est une vue en coupe transversale selon un plan médian de l'élément de battage montrant une autre disposition de fixation du dit élément sur l'élément oscillant de tête,
- la Figure 8 est une vue en coupe longitudinale d'un batteur équipé d'un embout monté dans le corps support,
- la figure 9 est une demi vue en coupe d'un embout de fixation des batteurs au support d'un ensemble de battage, selon une première forme de réalisation,
- la figure 10 est une demi vue en coupe d'un embout de fixation selon une seconde forme de réalisation,
- la figure 11 est une vue en perspective, en éclaté, d'une deuxième forme de réalisation d'un ensemble de battage,
- la figure 12 est une vue en perspective d'une troisième forme de réalisation d'un ensemble de battage,
- les figures 13 et 14 montrent d'autres formes de réalisation du corps support,
- la figure 15 montre les différents types de mouvements elliptiques circulaire pouvant être obtenu à partir de diverses inclinaisons de l'élément de battage par rapport à l'axe AA',
- la figure 16 est une vue coupe longitudinale d'une tête de cueillette selon une seconde forme de réalisation,
- la figure 17 est une vue de dessus de la platine de guidage de la transmission de mouvement que comporte la tête selon la figure 16.

### Meilleure manière de réaliser l'invention

Tel que représenté, l'appareil à main selon l'invention, pour la récolte mécanique des fruits par gaulage, comporte un manche allongé 1 tubulaire destiné à être saisi à la main recevant en extrémité distale une tête de cueillette 2 dotée d'au moins un élément de battage 3 formé d'un corps support 30 et d'au moins un batteur 31 longiforme fixé par son extrémité inférieure au corps support 30, ledit batteur 31 étant animé au cours de l'action de gaulage d'un mouvement pendulaire conique de façon que par son axe géométrique longitudinal BB', il décrive une surface conique. Chaque batteur 31, au cours de l'action de gaulage, vient frapper la frondaison de l'arbre en vue d'en détacher les fruits.

La tête de cueillette 2 comprend un corps de tête tubulaire 4 fixé en extrémité du manche tubulaire 1 et un élément oscillant de tête 5 prévu pour recevoir en fixation au moins un élément de battage 3. A cet effet cet élément de oscillant 5 comporte un élément de fixation 50 auquel est fixé, de préférence de manière amovible, l'élément de battage 3.

L'élément oscillant de tête 5 est porté par une rotule 7 solidaire du corps de tête 4. Plus particulièrement, la rotule 7 présente une bague interne et une bague externe. L'élément oscillant 5 est porté par la bague interne de la rotule 7. Par sa bague externe, la rotule 7 est fixée au corps de tête 7. Préférentiellement cette rotule 7 est constituée par un roulement à rotule.

L'élément oscillant de tête 5 présente un embout cylindrique 6 par lequel il est emmanché dans la bague interne du roulement à rotule 7 fixé par sa bague externe dans le corps tubulaire de tête 4. L'élément oscillant 5, par un épaulement vient en appui contre la bague interne du roulement à rotule 7.

L'élément oscillant 5 est en prise avec un mécanisme d'actionnement qui lui imprime un mouvement de battage pendulaire conique autour d'un axe géométrique CC' fixe, passant par le centre de la rotule 7. Ce mouvement est tel que chaque point géométrique d'un axe géométrique AA' longitudinal de symétrie attaché à l'élément oscillant et qui passe par le centre de la rotule 7, décrive une courbe fermée qui peut être un cercle ou une ellipse. Dans le cas selon lequel la courbe fermée est un cercle, chaque batteur 31 de l'élément de battage 3 est orienté en sorte que son axe longitudinal de symétrie BB' soit parallèle ou confondu avec l'axe AA'. Dans le cas selon lequel la courbe fermée est une ellipse, chaque batteur de l'élément de battage 3 est orienté en sorte que son axe longitudinal ne soit pas parallèle ou confondu avec l'axe AA'.

Ce mécanisme d'actionnement comprend un arbre de transmission 9 monté en rotation dans le manche tubulaire 1 accouplé par son extrémité proximale à un moteur d'entraînement 10 et par son extrémité distale à une transmission de mouvement 11 en prise avec l'élément oscillant de tête 5 et propre à lui imprimer un mouvement pendulaire conique.

Le moteur d'entraînement 10 est préférentiellement du type électrique et sera alimenté en énergie électrique par un jeu de batteries électriques portées soit par l'utilisateur soit, si leur poids est élevé, par un chariot de manutention manuellement tractable.

Conformément à l'invention, la transmission de mouvement 11 comprend d'une part un levier 12 fixé de manière radiale à l'arbre de transmission 9, s'étendant de manière radiale par rapport à ce dernier et d'autre part une tige rigide 13 solidarisée d'une part à l'élément oscillant de tête 5 et d'autre part au levier radial 12 en un point distant de l'axe géométrique de rotation de l'arbre d'entraînement 9.

Selon la forme préférée de réalisation, la tige de transmission 13 est engagée dans un alésage axial 14 pratiqué dans l'élément oscillant de tête 5 et plus particulièrement dans l'embout cylindrique 6 de ce dernier.

Le levier radial 12 comporte au moins un perçage 15, de préférence traversant, dans lequel est engagée la tige de transmission 13. Il y a lieu de noter que la tige de transmission 13 est engagée dans le perçage du levier 12 de manière à y être libre en rotation.

Selon une première forme de réalisation, le levier radial 12 ne comporte qu'un perçage 15 et ce perçage 15 se présente sous la forme d'une lumière oblongue se développant de manière radiale par rapport à l'axe de rotation de l'arbre d'entraînement 9. Selon cette forme de réalisation, la tige de transmission 13 est immobilisée dans la lumière 15, le long de l'axe longitudinal de cette dernière.

Avantageusement, la tige de transmission 13 est immobilisée dans la lumière 15 par deux butées 16 engagées axialement dans la lumière oblongue 15 de part et d'autre la tige de transmission 13. Avantageusement la position des deux butées 16 le long de la lumière 15 est ajustable. Cette disposition permet d'ajuster l'amplitude du mouvement des batteurs 31.

Dans la forme préférée de réalisation, les deux butées 16 sont constituées chacune par une vis pression. Ces deux vis pression sont respectivement engagées dans deux taraudages formés dans le levier 12 et débouchant dans la lumière oblongue 15. Ces deux taraudages sont pratiqués de manière opposée selon le grand axe de la lumière oblongue. Afin de permettre le réglage de l'amplitude du mouvement de secouage ou de battage sans obligation préalable de dépose du corps de tête 4, ce dernier comporte au moins un perçage radial traversant en regard duquel, par rotation de la transmission de mouvement 11, chaque vis 16 est successivement positionnée en vue d'être manoeuvrée dans le sens du vissage ou du dévissage par l'extrémité de la tige d'un tournevis engagée dans le perçage radial du corps de tête 4.

Selon une autre forme de réalisation, le levier radial 12 comporte plusieurs perçages 15 pratiqués à distance les uns des autres, l'axe central de chaque perçage étant contenu dans un plan géométrique commun, radial à l'axe de rotation de l'arbre de transmission 9. En fonction de l'amplitude requise pour le mouvement de battage, la tige de transmission 13 sera engagée dans le perçage 15 correspondant.

En variante, le levier radial 12 présente un bossage et la tige de transmission 13 est fixée à ce bossage. Dans cette forme d'exécution, la tige de transmission 13 sera montée de manière libre en rotation dans l'alésage 14 de l'embout 6 de l'élément oscillant 5. Pour sa fixation au bossage, la tige de transmission 13, par exemple, pourra comporter une forme de chape apte à venir coiffer le bossage. De plus la forme de chape pourra être équipée d'une vis pression apte à venir en pression contre le bossage pour immobiliser la chape sur le bossage.

Le bossage pourra se présenter sous la forme d'un bourrelet longitudinal se développant de manière radiale par rapport à l'axe de rotation de l'arbre d'entraînement.

Pour éviter tout phénomène de balourd, le levier 12 de la transmission de mouvement est équipé d'une masselotte d'équilibrage 17. On peut voir que cette masselotte vient en regard de l'une des vis de réglage 16. Pour permettre le réglage de l'amplitude du mouvement de secouage, malgré la présence de cette masselotte 17, cette dernière, selon l'axe géométrique longitudinal de la vis 16, présente un perçage traversant dans lequel est engagée en vue du réglage, la tige du tourne vis.

Avantageusement pour limiter la possibilité de rotation de l'élément oscillant de tête 5 par rapport à l'axe longitudinal de la tige de transmission 13, sont prévues deux butées solidaires du corps de tête 4 et un doigt élastique solidaire de l'embout cylindrique 6 et engagé entre les deux butées. L'élasticité du doigt a pour but d'absorber les chocs dudit doigt contre les butées.

Pour améliorer l'efficacité du gaulage, l'appareil selon l'invention peut être équipé de plusieurs éléments oscillants 5 associés chacun à une transmission de mouvement 11 qui lui est propre. Selon cette forme de réalisation, la tète de cueillette 2 comprend un bâti formé de deux platines superposées 18, 19 espacées l'une de l'autre et jointes l'une à l'autre par deux entretoises d'espacement 20. La platine supérieure 18 porte deux rotules 7 de guidage des éléments oscillants 5 tandis que la platine inférieure 19 porte deux paliers à bille 21 destinés respectivement au guidage en rotation des deux transmissions de mouvement 11 lesquelles comportent chacune un tourillon 22 prévu pour être engagé en rotation dans le palier de guidage 21 correspondant. Le levier radial 12 que comporte chaque transmission 1 est fixé au tourillon 22 correspondant. Toujours selon cette forme de réalisation, l'arbre d'entraînement 9 pénètre dans le bâti et porte dans ce dernier un pignon d'entraînement 23 engrené avec deux pignons 24 accouplés respectivement aux deux transmissions de mouvement et plus particulièrement aux leviers radiaux 12 de ces dernières.

De préférence, les pignons 23, 24 sont calés les uns aux autres de telle façon que les mouvements des éléments oscillants 5 l'un par rapport à l'autre présente un décalage en phase de 180 degrés. Une telle disposition a pour but de réaliser un équilibre dynamique des masses en mouvement. Grâce à cette disposition, chaque transmission de mouvement 11 peut être exempte de masselotte d'équilibrage.

Pour éviter que les batteurs 31 des deux éléments oscillants 5 ne viennent se heurter, chaque élément oscillant 5 est immobilisé en rotation par rapport à l'axe géométrique de la tige de transmission 13. À cet effet, selon une forme préférée de réalisation, l'embout 6 de chaque élément oscillant présente un pion radial 25 engagé entre deux doigts verticaux 26 fixés à la platine supérieure 18. Avantageusement le pion radial 25 sera élastique pour absorber les chocs contre les doigts verticaux 26.

Les batteurs 31 peuvent être animés d'un mouvement pendulaire conique à base elliptique ou à base circulaire. Pour l'obtention d'un mouvement pendulaire conique à base elliptique, selon une première forme de réalisation, les batteurs 31 de l'élément de battage 3 sont disposés par leurs axes longitudinaux BB' selon au moins un même plan géométrique incliné par rapport à l'axe AA'. Le degré d'inclinaison de ce plan par rapport à l'axe AA' détermine le rapport entre le petit axe de l'ellipse et le grand axe et le rendement de la cueillette. Cet angle est préférentiellement de l'ordre de vingt degrés.

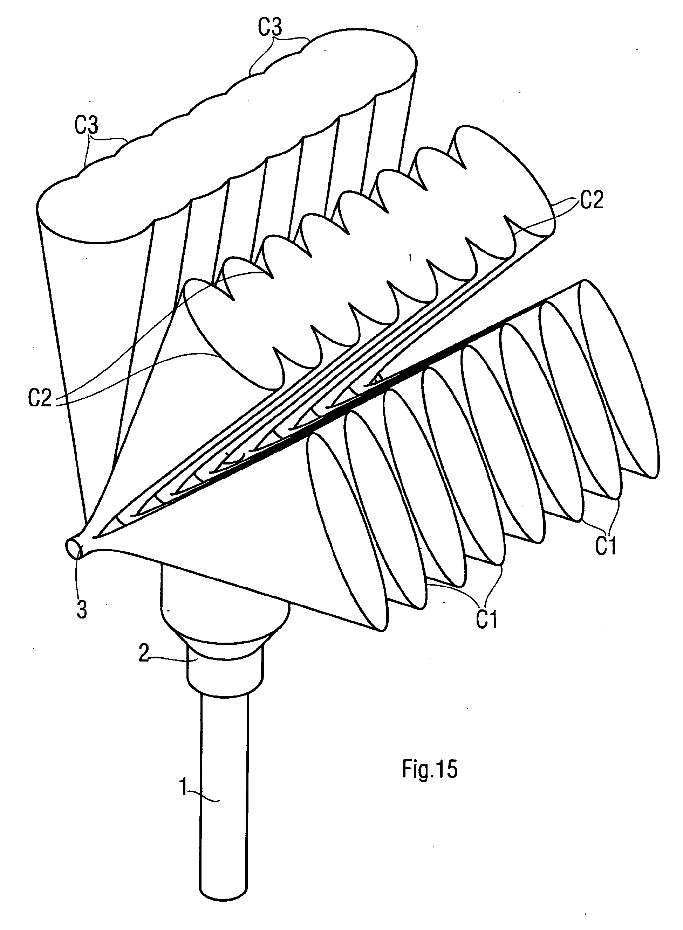

En figure 15 sont représentées les différentes courbes elliptiques que décrivent les extrémités des batteurs 31 selon l'inclinaison de leur axe BB' par rapport à l'axe AA'. Les courbes C1 correspondent à une inclinaison prononcée par rapport à l'axe AA'. On note que ces courbes C1 forment des ellipses allongées. Un mouvement de battage selon ces courbes C1 donne un rendement de cueillette faible mais ne détériore pas les rameaux. Les courbes C2 correspondent à une inclinaison moyenne de l'ordre de vingt degrés. Un mouvement de battage selon ces courbes, donne un bon rendement et avec une détérioration acceptable des rameaux. La courbe C3 correspond à une inclinaison nulle. Ces courbes correspondent à des cercles.

Afin de pouvoir ajuster cette valeur angulaire, l'élément de battage 3 par son corps 30 est fixé de manière ajustable en position angulaire par rapport à l'axe géométrique AA' dans l'élément de fixation 50. Cette disposition offre la possibilité de modifier les caractéristiques du mouvement de battage pour adapter ce dernier notamment à la nature des fruits à cueillir ainsi qu'à leur degré de maturité. On conçoit qu'avec un seul et même appareil, seulement par modification du degré d'inclinaison des batteurs, il est possible d'obtenir soit un mouvement pendulaire conique à base circulaire ou un mouvement pendulaire conique à base elliptique. Par ailleurs ce réglage peut être effectué aisément par l'utilisateur.

Comme dit précédemment, l'élément de battage 3 est constitué par un corps support 30 rectiligne qui peut être un solide de révolution longiforme, tubulaire ou plein et par plusieurs batteurs 31 longiformes, de section droite circulaire, et fixés par leur extrémité inférieure au corps support 30.

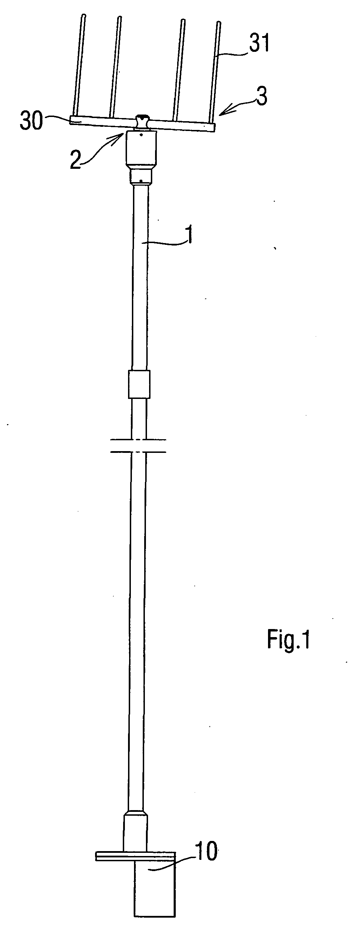

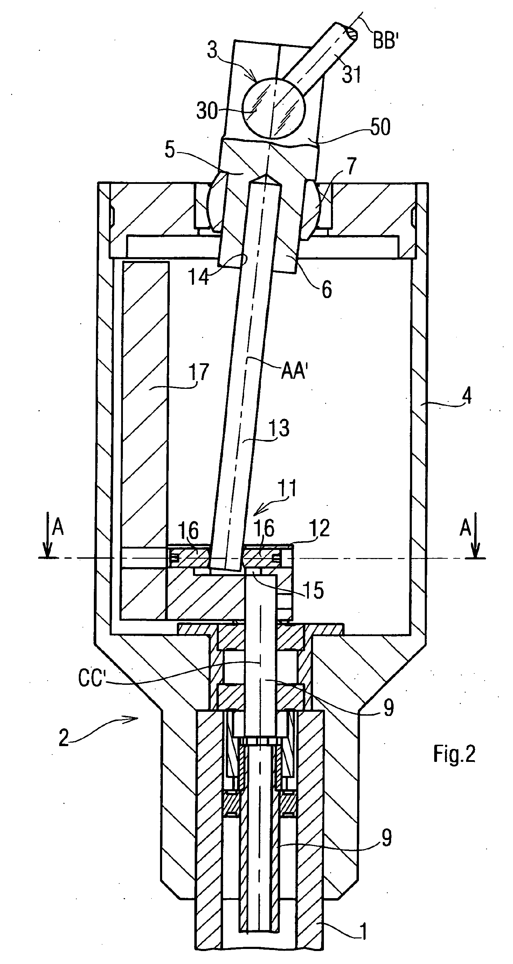

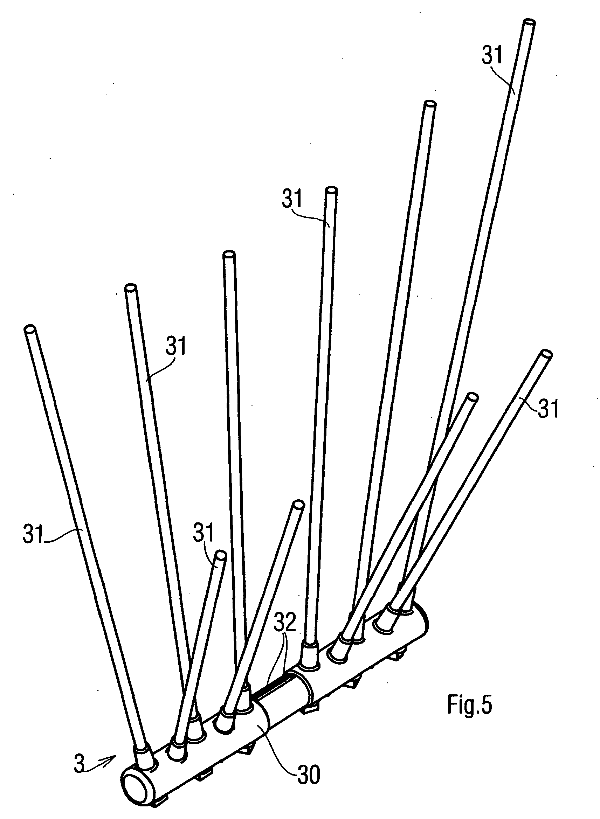

L'élément de battage 3 tel que représenté en figures 1 et 2 présente des batteurs 31 agencés de manière parallèle sur un corps support 30 longiforme mais selon d'autres variantes d'exécution telles que représentées en figures 5 à 14 l'élément de battage présente des batteurs 31 agencés de manière convergente vers le corps support 30. De même, ces batteurs peuvent être disposés selon un même plan géométrique, ou bien, répartis selon au moins deux plans géométriques angulairement écartés l'un de l'autre.

Le corps support 30, rigide comporte des perçages traversants 33 prévus pour recevoir la zone proximale des batteurs de secouage 31. Ces batteurs 31 se présentent sous la forme d'éléments cylindriques plein ou tubulaire. Ces batteurs 31 sont élastiquement flexibles et sont constitués préférentiellement à base de carbone. De préférence, ces batteurs 31 sont pleins.

Conformément à un autre aspect de l'invention, les batteurs 31 sont fixés sur le corps support 30 de manière à converger vers ce dernier de sorte qu'ils sont disposés selon une configuration en entonnoir ou en éventail apte à rassembler dans les intervalles angulaires qu'ils déterminent, une masse végétale beaucoup plus importante que s'ils étaient disposés de manière parallèle. Une telle disposition est propre à améliorer le rendement de la récolte en favorisant la transmission du mouvement de secouage à la ramure.

D'une autre manière aucun des batteurs 31 n'est parallèle à l'un quelconque des autres batteurs.

En figure 5 est représentée une forme de réalisation de l'élément de battage 3 selon l'invention. Sur cette figure, on remarque que le corps support 30 longiforme présente une zone centrale cylindrique de fixation à l'élément oscillant 5, ce dernier présentant une disposition de noix de serrage 50 pour recevoir en fixation le corps support 30. Cette disposition de noix de serrage 50 peut être formée de deux demi-noix de serrage dont la première est fixée à l'élément oscillant 5 et dont la seconde est amovible et est fixée par vis à la première demi-noix.

Pour assurer le calage angulaire de l'élément de battage 3, sur l'élément oscillant 5, le corps support 30 dans sa zone centrale présente au moins une empreinte en creux longiforme 32, parallèle à l'axe longitudinal du support 30. Cette empreinte en creux 32 est prévue pour recevoir un tenon formant saillie dans la noix de serrage 50 et plus particulièrement dans la seconde demi-noix.

Avantageusement, sont prévues deux empreintes en creux parallèles 32, déterminant deux positions angulaires distinctes de l'élément de battage 3 par rapport à l'élément oscillant 5.

Le corps support 30 est équipé de plusieurs perçages traversants 33 prévus pour recevoir les batteurs 31.

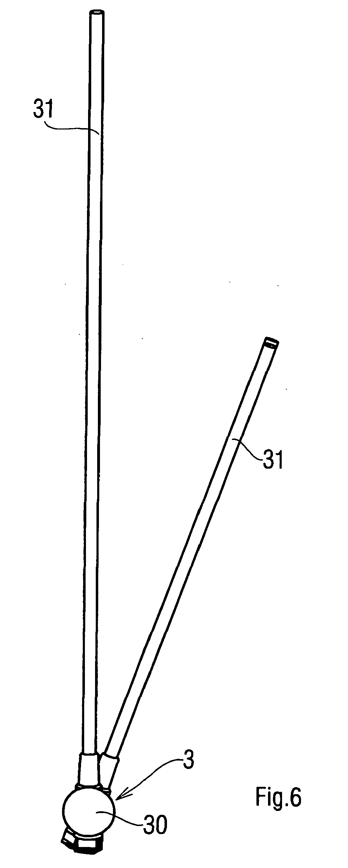

Selon la forme préférée de réalisation, comme montrée plus particulièrement en figure 6, l'élément de battage 3 présente deux séries de batteurs 31 organisés selon deux plans distincts diamétraux au corps support 30, ces deux plans formant un angle aigu entre eux. À titre purement indicatif la valeur angulaire entre les deux plans est de 20 degrés. Avec une telle forme de réalisation, le corps support 30 présente deux séries de perçages 33 organisés selon deux plans géométriques distincts formant un angle aigu entre eux, chaque perçage 33 par son axe longitudinal étant disposé de manière non parallèle par rapport à l'axe longitudinal de chaque autre perçage 33.

Avec une telle disposition, il est possible d'obtenir pour les batteurs 31 de l'une des séries un mouvement conique à base circulaire et pour les batteurs 31 de l'autre série un mouvement conique à base elliptique. Ceci peut correspondre au calage de la noix 50 dans la première empreinte 12, cette dernière étant formée selon le plan géométrique contenant les axes longitudinaux des batteurs 31 de la première série. IL est également possible d'obtenir un mouvement conique à base elliptique pour l'une des séries et un mouvement conique toujours à base elliptique pour l'autre série. Ceci correspond au calage de la noix 50 dans la seconde empreinte. Ces mouvements peuvent avoir strictement les mêmes caractéristiques ou bien le rapport entre les longueurs du petit axe et du grand axe de l'ellipse décrite par l'extrémité distale de chaque batteur 31 de l'une des séries pourra être différent du rapport entre les longueurs du petit axe et du grand axe de l'ellipse décrite par l'extrémité distale de chaque batteur de l'autre série.

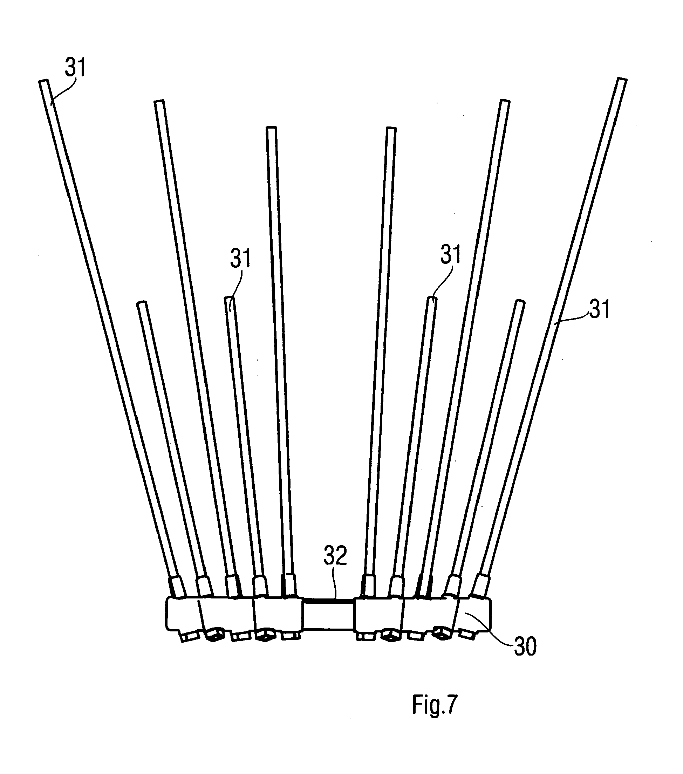

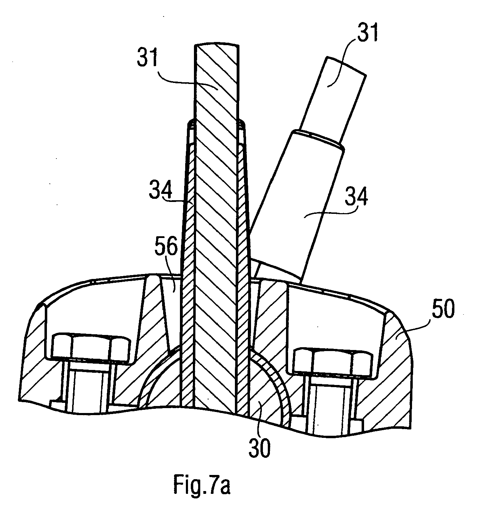

Toujours selon cette forme de réalisation, comme montrée en figure 7, la première série est composée de batteurs 31 de longueur supérieure à celle des batteurs 31 de la seconde série, mais, en variante, les batteurs des deux séries pourront présenter des longueurs identiques.

Toujours selon la forme préférée de réalisation, comme montrée plus particulièrement en figure 7, les extrémités distales des batteurs 31 de la première série, depuis les batteurs périphériques vers les batteurs centraux, sont situées selon des niveaux de hauteur décroissants. D'une autre manière, les batteurs 31 de la première série depuis les batteurs centraux vers les batteurs périphériques présentent des longueurs croissantes. Il a été observé que cette disposition, facilite la pénétration de la tête de cueillette 2 dans la ramure.

Avantageusement, les extrémités distales des batteurs 31 de la seconde série sont situées selon un même niveau de hauteur.

Toujours selon la forme préférée de réalisation (figure 7), les batteurs 31 de chaque série sont disposés en regard des intervalles séparant les batteurs 31 de l'autre série. Une telle disposition est propre à améliorer le degré transmission à la ramure, du mouvement de secouage dont sont animés les batteurs 31 et de réduire l'importance des zones mortes.

Dans l'exemple de réalisation précédemment décrit, la zone centrale du corps support 30, du fait de la conformation de noix, ne comporte aucun batteur de sorte que subsiste à ce niveau une zone morte relativement importante. Pour palier cet inconvénient, comme on peut le voir en figure 7a, le corps support 30 comporte en zone centrale un batteur 31 et la seconde demi-noix est dotée d'une lumière oblongue 56 traversante formée selon un plan perpendiculaire à l'axe de révolution du corps support, cette lumière présentant une largeur supérieure au diamètre du batteur 31. La lumière 31 détermine deux positions de butées angulairement espacées l'une de l'autre, la valeur angulaire séparant ces deux positions de butées étant déterminées par la longueur de la lumière 56. Ainsi par pivotement autour de l'axe longitudinal du corps support 30, l'élément de battage 3, par mise en butée du batteur central 31 contre respectivement les des extrémités de la lumière 56, peut occuper deux positions angulaires extrêmes. Il peut aussi occuper des positions intermédiaires entre ces deux positions extrêmes. Cette disposition autorise aussi le réglage des paramètres du mouvement pendulaire conique, une position médiane dans la lumière conduira à l'obtention d'un mouvement à base circulaire tandis qu'une position décalée angulairement de cette position médiane conduira à l'obtention d'un mouvement à base elliptique.

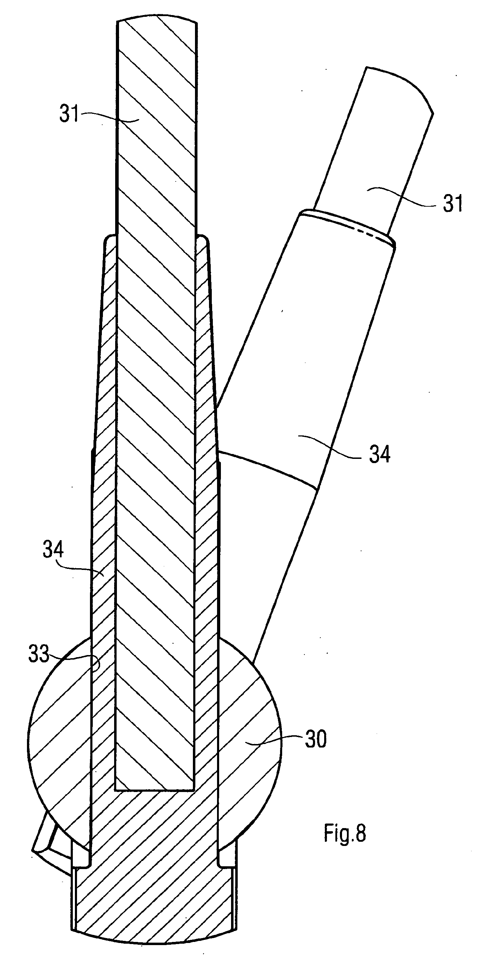

Avantageusement, chaque batteur 31, dans sa zone proximale, est recouvert par un embout de fixation 34 par lequel il est engagé dans l'un des perçages 33 du support 31 (figure 8). Avantageusement chaque embout 34 est rigide pour résister aux efforts et est réalisé en matière synthétique éventuellement chargée en fibres de verre.

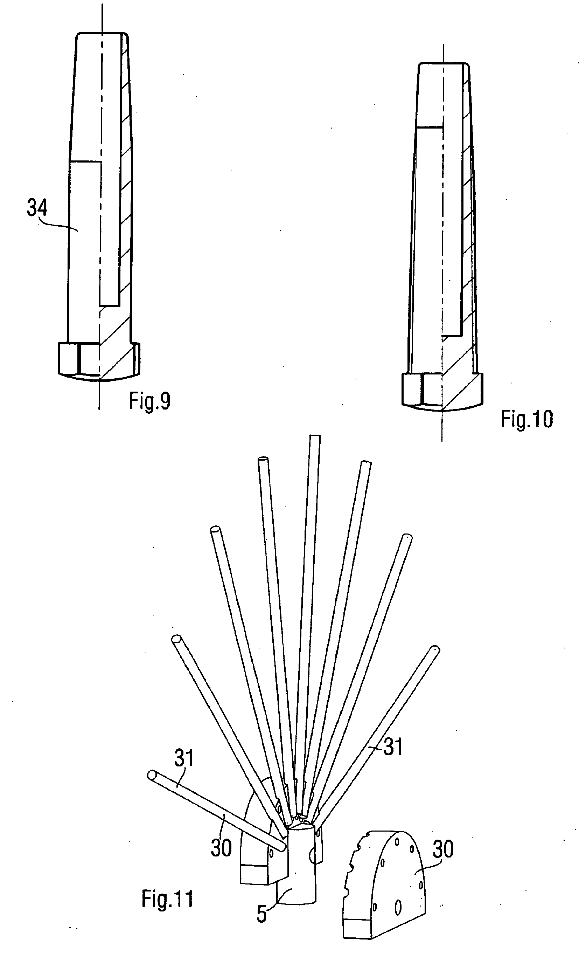

En figure 9 est représenté un embout 34 selon une première forme de réalisation. On observe que cet embout 34 est doté d'un perçage borgne axial dans lequel est engagée en force la partie proximale du batteur 31. Cet embout présente une portée cylindrique lisse par laquelle il est engagé en force dans le perçage 33 correspondant du corps support 30.

En figure 10 est représenté un embout 34 selon une seconde forme de réalisation. On remarque sur cette figure que l'embout 34 présente une portée non plus lisse et cylindrique mais conique et filetée. Par cette portée, cet embout est engagé en vissage dans le perçage 33 correspondant, ce dernier étant taraudé. La conicité de la portée filetée sera telle qu'elle permette un blocage par coincement dans le perçage 33. Il n'est nul besoin de rappeler ici les conditions d'un blocage par effet de cône, ces dernières étant bien connues de l'homme de l'art. En variante la portée filetée est cylindrique.

Pour faciliter le vissage et le dévissage, l'embout 34 de fixation est doté en arrière de la portée filetée d'un carré de manoeuvre.

On remarquera aussi que cet embout 34 présente un perçage traversant axial dans lequel est engagée en force la partie proximale du batteur 31 correspondant.

En figure 11 est représentée en perspective et en éclaté une deuxième forme de réalisation de l'élément de battage 3. On observe sur cette figure que le corps support 30 est constitué par deux flasques semi-circulaires destinés à être assemblés l'un à l'autre par une pluralité de vis. Chaque flasque comporte une série d'empreintes radiales, semi-cylindriques formant après assemblage avec leur homologue des logements cylindriques radiaux dans lesquels sont emprisonnés les batteurs 31 par leur zone proximale. On observe aussi que chaque flasque est doté d'une empreinte semi-cylindrique formant après assemblage, en combinaison avec l'empreinte homologue, un logement cylindrique venant en serrage contre l'élément oscillant 5, ce dernier étant cylindrique.

Dans cette forme de réalisation, les batteurs 31 sont disposés de manière radiale. Par ailleurs par leur axe longitudinal, ils sont disposés dans un même plan.

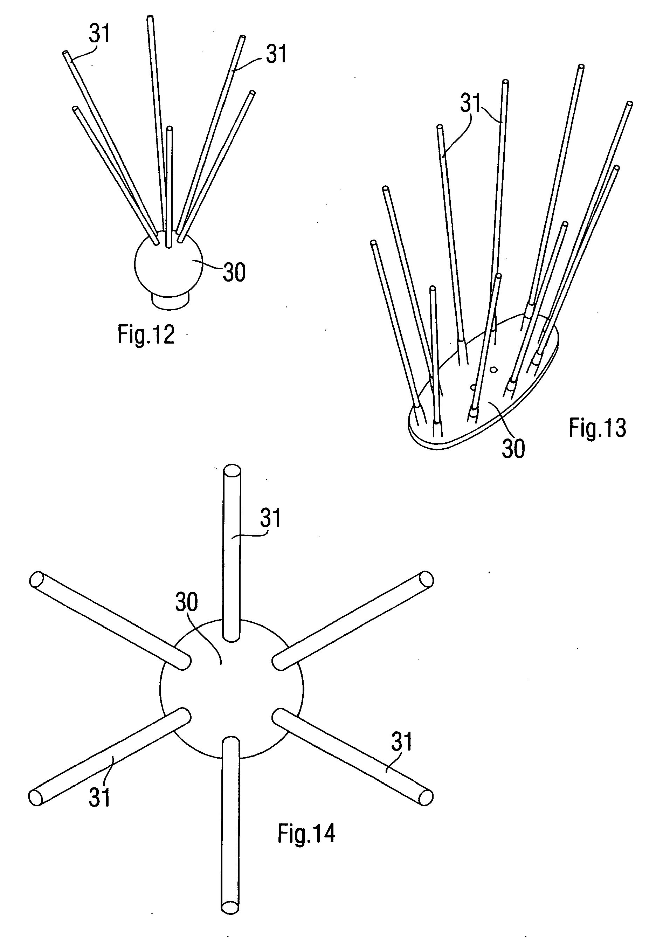

En figure 12 est représentée un élément de battage 3 selon une troisième forme de réalisation. Le corps support 30 de cet élément de battage 3 est sphérique et les batteurs 31 occupent des positions radiales par rapport la forme sphérique du corps support 30.

Selon d'autres formes de réalisation telles que représentées en figure 13 et en figure 14, le corps support 30 ne se présente plus sous la forme d'un corps de révolution allongé mais sous la forme d'une platine d'épaisseur constante présentant par exemple un contour elliptique fig.13 ou circulaire fig.14.

Dans les formes de réalisation précédemment décrites, le mouvement pendulaire conique à base elliptique est obtenu par inclinaison de l'axe BB' des batteurs par rapport à l'axe AA', mais selon une variante d'exécution ce type de mouvement est obtenu non plus par réglage mais par construction.

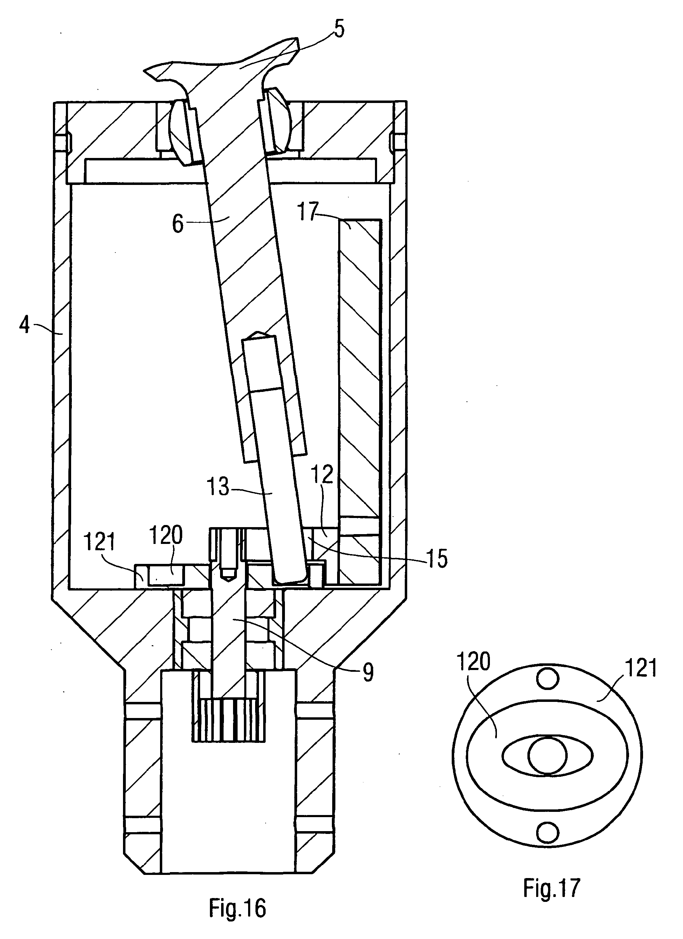

Ainsi, selon cette variante d'exécution comme représentée en figures 16 et 17, la transmission de mouvement 11 comprend un levier radial 12 fixé à l'arbre de transmission 9 et s'étendant de manière radiale par rapport à ce dernier, une tige de transmission 13 solidarisée à l'élément oscillant de tête 5, laquelle tige 13 est engagée de manière glissante d'une part dans une lumière traversante 15 oblongue pratiquée dans le levier de transmission 12 et d'autre part dans un chemin de guidage 120 de forme elliptique pratiqué dans une platine 121 fixée au corps de tête 4 sous le levier radial. Avec une telle forme de réalisation, il n'est nul besoin pour obtenir le mouvement elliptique d'incliner l'élément de battage par rapport à l'axe AA'.

Dans la forme préférée de réalisation, la platine 121 se présente sous la forme d'un disque et le chemin de guidage 120 est formé par une rainure creusée dans l'épaisseur de la platine.

Il va de soi que la présente invention peut recevoir tous aménagements et variantes, du domaine des équivalents techniques, sans pour autant sortir du cadre du présent brevet tel que limité par les revendications.

## Revendications

1. Appareil à main pour la récolte mécanique des fruits par gaulage, comportant un manche allongé (1) tubulaire, destiné à être saisi à la main, recevant en extrémité distale une tête de cueillette (2) comprenant un corps de tête (4) fixé au manche (1) portant un élément oscillant de tête (5) prévu pour recevoir au moins un élément de battage (3) formé d'un corps support (30) et d'au moins un batteur (31) longiforme fixé par son extrémité inférieure au corps support (30), ledit élément oscillant de tête (5) étant en prise avec un mécanisme d'actionnement qui lui imprime un mouvement pendulaire conique, ledit mécanisme d'actionnement comprenant un arbre de transmission (9) monté en rotation dans le manche tubulaire (1), accouplé par son extrémité proximale à un moteur d'entraînement (10) et par son extrémité distale à une transmission de mouvement (11) en prise avec l'élément oscillant de tête (5), **caractérisé en ce que** l'élément oscillant de tête (5) est porté par une rotule (7) solidaire du corps de tête (4) et que la transmission de mouvement comprend d'une part un levier (12) fixé à l'arbre de transmission (9) s'étendant de manière radiale par rapport à ce dernier et d'autre part une tige (13) solidarisée d'une part à l'élément oscillant de tête (5) et d'autre part au levier radial (12) en un point distant de l'axe géométrique de rotation (CC') de l'arbre d'entraînement (9).

2. Appareil à main selon la revendication 1, **caractérisé en ce que** la tige de transmission (13) est engagée dans un alésage axial (14) pratiqué dans l'élément oscillant (5).

3. Appareil à main selon la revendication 1 ou la revendication 2, **caractérisé en ce que** le levier radial (12) comporte au moins un perçage (15) et que la tige de transmission (13) est engagée dans le ou l'un des perçages (15).

4. Appareil à main selon la revendication précédente, **caractérisé en ce que** le levier radial (12) comporte un perçage (15) et que ce perçage (15) se présente sous la forme d'une lumière oblongue.

5. Appareil à main selon la revendication 4, **caractérisé en ce que** la tige de transmission (13) est immobilisée dans la lumière (15) le long de l'axe longitudinal de cette dernière.

6. Appareil à main selon la revendication 5, **caractérisé par** deux butées (16) engagées dans la lumière oblongue (15) de part et d'autre la tige de transmission (13) et déterminant la position de cette dernière dans ladite lumière.

7. Appareil à main selon la revendication 6, **caractérisé en ce que** les deux butées (16) sont constituées chacune par une vis pression engagée dans un taraudage du levier (12) débouchant dans la lumière oblongue (15).

8. Appareil à main selon la revendication 1 ou la revendication 2 **caractérisé en ce que** le levier radial (12) présente un bossage et que la tige de transmission (13) est fixée à ce bossage.

9. Appareil à main selon l'une quelconque des revendications précédentes, **caractérisé en ce qu'**il est équipé de plusieurs éléments oscillants (5) associés chacun à une transmission de mouvement (11) qui lui est propre.

10. Appareil à main selon la revendication 9, **caractérisé en ce que** la tête de cueillette 2 comprend un bâti formé de deux platines superposées (18, 19) espacées l'une de l'autre, et jointes l'une à l'autre par deux entretoises d'espacement (20), que la platine supérieure (18) porte chaque rotule (7) de guidage des éléments oscillants (5) tandis que la platine inférieure (19) porte deux paliers à bille (21) destinés respectivement au guidage en rotation des deux transmissions de mouvement (11) lesquelles comportent chacune un tourillon (21) prévu pour être engagé en rotation dans le palier de guidage (21) correspondant que le levier radial (12) que comporte chaque transmission (11) est fixé au tourillon (22) correspondant et que l'arbre d'entraînement (9) pénètre dans le bâti et porte dans ce dernier un pignon d'entraînement (23) engrené avec deux pignons (24) accouplés respectivement aux deux transmissions de mouvement et plus particulièrement aux leviers radiaux (12) de ces dernières.

11. Appareil à main selon la revendication 9 ou la revendication 10, **caractérisé en ce que** les pignons (23), (24) sont calés les uns aux autres de telle façon que les mouvements des éléments oscillants (5) l'un par rapport à l'autre présentent un décalage en phase de 180 degrés.

12. Appareil à main selon la revendication 10 ou la revendication 11, **caractérisé en ce que** chaque élément oscillant (5) présente un embout (6) et que ledit embout présente un pion radial (25) engagé entre deux doigts verticaux (26) fixés à la platine supérieure (18).

13. Appareil à main selon l'une quelconque des revendications précédentes, **caractérisé en ce que** les batteurs (31) sont parallèles les uns aux autres.

14. Appareil à main selon l'une quelconque des revendications 1 à 12, **caractérisé en ce que** les batteurs (31) sont fixés sur le corps support (30) de manière à converger vers ce dernier et ramener au plus prés de la rotule (7) la masse végétale à secouer.

15. Appareil à main selon la revendication précédente, **caractérisé en ce que** chaque batteur (31) par rapport à chacun des autres batteurs (31) occupe une position non parallèle.

16. Appareil à main selon la revendication 14 ou la revendication 15, **caractérisé en ce que** les extrémités distales des batteurs (31), depuis les batteurs périphériques vers les batteurs centraux, sont situées selon des niveaux de hauteur décroissants.

17. Appareil à main selon l'une quelconque des revendications précédentes, **caractérisé en ce que** le corps support (30) porte deux séries de batteurs (31), les deux séries de batteurs par les axes longitudinaux (BB') des batteurs étant disposées selon au moins deux plans géométriques sécants formant entre eux un angle aigu.

18. Appareil à main selon la revendication précédente, **caractérisé en ce que** la première série est composée de batteurs (31) de longueur supérieure à celle des batteurs (31) de la seconde série.

19. Appareil à main selon les revendications 16 et 17 prises ensemble, **caractérisé en ce que** les extrémités distales des batteurs (31) de la première série, depuis les batteurs périphériques vers les batteurs centraux, sont situées selon des niveaux de hauteur décroissants.

20. Appareil à main selon la revendication précédente, **caractérisé en ce que** les extrémités distales des batteurs (31) de la seconde série sont situées selon un même niveau de hauteur.

21. Appareil à main selon l'une quelconque des revendications 17 à 20, **caractérisé en ce que** les batteurs (31) de chaque série sont disposés en regard des intervalles séparant les batteurs (31) de l'autre série.

22. Appareil à main selon l'une quelconque des revendications précédentes, **caractérisé en ce que** chaque batteur (31) comporte un embout (34) recouvrant sa zone proximale par lequel il est fixé dans un perçage correspondant (33) formé dans le support (31).

23. Appareil à main selon la revendication précédente, **caractérisé en ce que** chaque embout (34) présente une portée cylindrique lisse par laquelle il est engagé en force dans le perçage (33) correspondant.

24. Appareil à main selon la revendication 22, **caractérisé en ce que** chaque embout (14) présente une portée conique filetée par laquelle il est engagée en vissage dans le perçage (33) correspondant, ce dernier étant taraudé.

25. Appareil à main selon la revendication précédente, **caractérisé en ce que** la trajectoire de chaque batteur (31) recouvre partiellement la trajectoire de l'un au moins du batteur (31) qui lui est contigu.

26. Appareil à main selon l'une quelconque des revendications précédentes, **caractérisé en ce qu'**au moins l'un des batteurs (31) est animé d'un mouvement pendulaire conique à base elliptique.

27. Appareil à main selon l'une quelconque des revendications précédentes, **caractérisé en ce que** l'élément oscillant (5) comporte un organe de fixation (50) et l'élément de battage (3) est fixé par son corps support (30) à cet organe de fixation, de manière ajustable en inclinaison par rapport à un axe géométrique (AA') attaché à l'élément oscillant (5) et passant par le centre géométrique de la rotule (7).

28. Appareil à main selon l'une quelconque des revendications précédentes, **caractérisé en ce que** le corps support (30) se présente sous la forme d'un solide de révolution longiforme.

29. Appareil à main selon la revendication précédente **caractérisé en ce que** le corps support (30) présente une zone centrale cylindrique de fixation à l'élément oscillant 5, ce dernier présentant une disposition de noix de serrage (50) pour recevoir en fixation le corps support (30), ladite disposition de noix de serrage (50) étant formée de deux demi-noix de serrage dont la première est fixée à l'élément oscillant (5) et dont la seconde est amovible et est fixée par vis à la première demi-noix.

30. Appareil à main selon la revendication précédente, **caractérisé en ce que** le corps support (30) dans sa zone centrale présente au moins une empreinte en creux longiforme (32), parallèle à l'axe longitudinal du support (30) et que cette empreinte en creux (32) est prévue pour recevoir un tenon formant saillie dans la seconde demi-noix de serrage.

31. Appareil à main selon la revendication précédente, **caractérisé en ce que** le corps support (30) dans sa zone centrale présente deux empreintes en creux parallèles (32), déterminant deux positions angulaires distinctes de l'élément de battage (3) par rapport à l'élément oscillant (5).

32. Appareil à main selon la revendication précédente, **caractérisé en ce que** le corps support (30) comporte en zone centrale un batteur (31) et que la seconde demi-noix est dotée d'une lumière oblongue traversante (56) formée selon un plan perpendiculaire à l'axe de révolution du corps support, cette lumière (56) présentant une largeur supérieure au diamètre du batteur (31) et ladite lumière (31) déterminant deux positions de butées angulairement espacées l'une de l'autre.

33. Appareil à main selon l'une quelconque des revendications 1 à 27 **caractérisé en ce que** le corps support (30) se présente sous la forme d'une platine.

## Claims

1. A hand-held apparatus for the mechanical harvesting of fruit by beating, comprising an elongate tubular handle (1) intended to be gripped in the hand, receiving at the distal end a gathering head (2) comprising a head body (4) fixed to the handle (1) carrying a oscillating head element (5) designed to receive at least one beating element (3) formed by a support body (30) and at least one elongate beater (31) fixed by the bottom end thereof to the support body (30), said oscillating head element (5) being in engagement with an actuation mechanism that imparts a conical pendular movement to it, said actuation mechanism comprising a transmission shaft (9) mounted for rotation in the tubular handle (1), coupled by its proximal end to a drive motor (10) and by its distal end to a movement transmission (11) in engagement with the oscillating head element (5), **characterised in that** the oscillating head element (5) is carried by a swivel (7) secured to the head body (4) and **in that** the movement transmission comprises firstly a lever (12) fixed to the transmission shaft (9) extending radially with respect to the latter and secondly a rod (13) secured firstly to the oscillating head element (5) and secondly to the radial lever (12) at a point distant from the geometric rotation axis (CC') of the drive shaft.

2. A hand-held apparatus according to claim 1, **characterised in that** the transmission rod (13) is engaged in an axial bore (14) formed in the oscillating element (5).

3. A hand-held apparatus according to claim 1 or claim 2, **characterised in that** the radial lever (12) comprises at least one piercing (15) and **in that** the transmission rod (13) is engaged in the piercing or one of the piercings (15).

4. A hand-held apparatus according to the preceding claim, **characterised in that** the radial lever (12) comprises a piercing (15) and **in that** this piercing (15) is in the form of an oblong slot.

5. A hand-held apparatus according to claim 4, **characterised in that** the transmission rod (13) is immobilised in the slot (15) along the longitudinal axis of the latter.

6. A hand-held apparatus according to claim 5, **characterised by** two stops (16) engaged in the oblong slot (15) one either side of the transmission rod (13) and determining the position of the latter in said slot.

7. A hand-held apparatus according to claim 6, **characterised in that** the two stops (16) each comprise a pressure screw engaged in a thread in the lever (12) emerging in the oblong slot (15).

8. A hand-held apparatus according to claim 1 or claim 2, **characterised in that** the radial lever (12) has a protrusion and **in that** the transmission rod (13) is fixed to this protrusion.

9. A hand-held apparatus according to any one of the preceding claims, **characterised in that** it is equipped with several oscillating elements (5) each associated with a movement transmission (11) that is particular to it.

10. A hand-held apparatus according to claim 9, **characterised in that** the gathering head (2) comprises a frame formed by two superimposed plates (18, 19) spaced apart from each other and joined to each other by two spacing struts (20), **in that** the top plate (18) carries each swivel (7) guiding the oscillating elements (5) while the bottom plate (19) carries two ball bearings (21) intended respectively for the rotational guidance of the two movement transmissions (11) which each comprises a journal (21) designed to be rotationally engaged in the corresponding guide bearing (21), **in that** the radial lever (12) that each transmission (11) has is fixed to the corresponding journal (22) and **in that** the drive shaft (9) enters the frame and carries in the latter a driving gear wheel (23) meshed with two gear wheels (24) coupled respectively to the two movement transmissions and more particularly to the radial levers (12) of the latter.

11. A hand-held apparatus according to claim 9 or claim 10, **characterised in that** the gear wheels (23), (24) are fixed to one another so that the movements of the oscillating elements (5) with respect to one another have a phase offset of 180°.

12. A hand-held apparatus according to claim 10 or claim 11, **characterised in that** each oscillating element (5) has a connecting piece (6) and **in that** said connecting piece has a radial pin (25) engaged between two vertical fingers (26) fixed to the top plate (18).

13. A hand-held apparatus according to any one of the preceding claims, **characterised in that** the beaters (31) are parallel to each other.

14. A hand-held apparatus according to any one of claims 1 to 12, **characterised in that** the beaters (31) are fixed to the support body (30) so as to converge towards the latter and to bring the plant mass to be shaken as close as possible to the swivel (7).

15. A hand-held apparatus according to the preceding claim, **characterised in that** each beater (31) occupies a non-parallel position with respect to each of the other beaters (31).

16. A hand-held apparatus according to claim 14 or claim 15, **characterised in that** the distal ends of the beaters (31), from the peripheral beaters towards the central beaters, are situated at decreasing height levels.

17. A hand-held apparatus according to any one of the preceding claims, **characterised in that** the support body (30) carries two series of beaters (31), the two series of beaters, by means of the longitudinal axes (BB') of the beaters, being disposed on at least two secant geometric planes forming an acute angle between them.

18. A hand-held apparatus according to the preceding claim, **characterised in that** the first series is composed of beaters (31) with a length greater than the length of the beaters (31) in the second series.

19. A hand-held apparatus according to claims 16 and 17 taken together, **characterised in that** the distal ends of the beaters (31) in the first series, from the peripheral beaters towards the central beaters, are situated at decreasing height levels.

20. A hand-held apparatus according to the preceding claim, **characterised in that** the distal ends of the beaters (31) in the second series are situated at the same height level.

21. A hand-held apparatus according to any one of claims 17 to 20, **characterised in that** the beaters (31) in each series are disposed opposite the gaps separating the beaters (31) in the other series.

22. A hand-held apparatus according to any one of the preceding claims, **characterised in that** each beater (31) comprises a connecting piece (34) covering the proximal area thereof by means of which it is fixed in a corresponding piercing (33) formed in the support (31).

23. A hand-held apparatus according to the preceding claim, **characterised in that** each connecting piece (34) has a smooth cylindrical length by means of which it is forcibly engaged in the corresponding piercing (33).

24. A hand-held apparatus according to claim 22, **characterised in that** each connecting piece (14) has a threaded conical length by means of which it is engaged by screwing in the corresponding piercing (33), the latter being tapped.

25. A hand-held apparatus according to the preceding claim, **characterised in that** the path of each beater (31) partially overlaps the path of at least one of the beaters (31) that is contiguous with it.

26. A hand-held apparatus according to any one of the preceding claims, **characterised in that** at least one of the beaters (31) is driven in a conical pendular movement with an elliptical base.

27. A hand-held apparatus according to any one of the preceding claims, **characterised in that** the oscillating element (5) comprises a fixing member (50) and the beating element (3) is fixed by its support body (30) to this fixing member, in a way that is adjustable for inclination with respect to a geometric axis (AA') attached to the oscillating element (5) and passing through the geometric centre of the swivel (7).

28. A hand-held apparatus according to any one of the preceding claims, **characterised in that** the support body (30) is in the form of an elongate solid of revolution.

29. A hand-held apparatus according to the preceding claim, **characterised in that** the support body (30) has a cylindrical central area for fixing to the oscillating element (5), the latter having a clamping nut arrangement (50) for receiving the support body (30) fixedly, said clamping nut arrangement (50) being formed by two clamping half-nuts, the first of which is fixed to the oscillating element (5) and the second of which is removable and is fixed by screws to the first half-nut.

30. A hand-held apparatus according to the preceding claim, **characterised in that** the support body (30) in the central area thereof has at least one elongate hollow recess (32), parallel to the longitudinal axis of the support (30), and **in that** this hollow recess (32) is designed to receive a tenon forming a projection in the second clamping half-nut.

31. A hand-held apparatus according to the preceding claim, **characterised in that** the support body (30) in the central area thereof has two parallel hollow recesses (32), determining two distinct angular positions of the beating element (3) with respect to the oscillating element (5).

32. A hand-held apparatus according to the preceding claim, **characterised in that** the support body (30) comprises a beater (31) at its central area and **in that** second half-nut is provided with a through oblong slot (56) formed on a plane perpendicular to the rotation axis of the support body, this slot (56) having a width greater than the diameter of the beater (31) and said slot (31) determining two stop positions angularly spaced apart from each other.

33. A hand-held apparatus according to any one of claims 1 to 27, **characterised in** the support body (30) is in the form of a plate.

## Patentansprüche

1. Handgeführtes Gerät zur mechanischen Obsternte durch Abschlagen, umfassend einen langgestreckten, rohrföromigen Griff (1) zum manuellen Ergreifen, dessen distales Ende einen Pflückkopf (2) aufnimmt, welcher einen an dem Griff (1) befestigten Kopfkörper (4) umfasst, welcher ein schwingendes Kopfteil (5) trägt, das dazu ausgelegt ist, mindestens eine Schlageinrichtung (3) aufzunehmen, die aus einem Haltekörper (30) und mindestens einem länglichen Schlagteil (31) gebildet ist, das an seinem unteren Ende am Haltekörper (30) befestigt ist, wobei das schwingende Kopfteil (5) mit einem Betätigungsmechanismus in Eingriff steht, der diesem eine pendelartige, konische Bewegung vorgibt, wobei der Betätigungsmechanismus eine Übertragungswelle (9) umfasst, welche rotatorisch in dem rohrförmigen Griff (1) gelagert ist und an ihrem proximalen Ende mit einem Antriebsmotor (10) und an ihrem distalen Ende mit einer Bewegungsübertragungseinrichtung (11) gekoppelt ist, welche mit dem schwingenden Kopfteil (5) in Eingriff steht, **dadurch gekennzeichnet, dass** das schwingende Kopfteil (5) durch ein Kugelgelenk (7) gehalten wird, das mit dem Kopfkörper (4) fest verbunden ist, und dass die Bewegungsübertragungseinrichtung einerseits einen Hebel (12), der an der Übertragungswelle (9) befestigt ist und sich radial von dieser erstreckt, und andererseits eine Stange (13) umfasst, die einerseits mit dem schwingenden Kopfteil (5) und andererseits mit dem radialen Hebel (12) in einem von der geometrischen Rotationsachse (CC') der Antriebswelle (9) fern liegenden Punkt fest verbunden ist.

2. Handgeführtes Gerät nach Anspruch 1, **dadurch gekennzeichnet, dass** die Übertragungsstange (13) in einer axialen Bohrung (14) des schwingenden Teils (5) angreift.

3. Handgeführtes Gerät nach Anspruch 2, **dadurch gekennzeichnet, dass** der radiale Hebel (12) mindestens eine Bohrung (15) umfasst und dass die Übertragungsstange (13) in der /einer der Bohrungen (15) angreift.

4. Handgeführtes Gerät nach dem vorstehenden Anspruch, **dadurch gekennzeichnet, dass** der radiale Hebel (12) eine Bohrung (15) umfasst und dass die Bohrung (15) als eine längliche Öffnung ausgeführt ist.

5. Handgeführtes Gerät nach Anspruch 4, **dadurch gekennzeichnet, dass** die Übertragungsstange (13) in der Öffnung (15) entlang deren Längsachse festgesetzt ist.

6. Handgeführtes Gerät nach Anspruch 5, **gekennzeichnet durch** zwei Anschläge (16), die in der länglichen Öffnung (15) auf beiden Seiten der Übertragungsstange (13) angreifen und deren Position in der Öffnung festlegen.

7. Handgeführtes Gerät nach Anspruch 6, **dadurch gekennzeichnet, dass** jeder der beiden Anschläge (16) aus einer Druckschraube gebildet ist, welche in ein Innengewinde des Hebels (12) eingeschraubt ist, das in die längliche Öffnung (15) mündet.

8. Handgeführtes Gerät nach Anspruch 1 oder Anspruch 2, **dadurch gekennzeichnet, dass** der radiale Hebel (12) eine Bosse aufweist und dass die Übertragungsstange (13) an der Bosse befestigt ist.

9. Handgeführtes Gerät nach einem der vorstehenden Ansprüche, **dadurch gekennzeichnet, dass** es mehrere schwingende Teile (5) aufweist von denen jedes einer ihm eigenen Bewegungsübertragungseinrichtung (11) zugeordnet ist.

10. Handgeführtes Gerät nach Anspruch 9, **dadurch gekennzeichnet, dass** der Pflückkopf 2 ein Gehäuse aus zwei in einem Abstand übereinander angeordneten Platten (18, 19) umfasst, die miteinander durch zwei Abstandshalter (20) verbunden sind, dass die obere Platte (18) jedes Kugelgelenk (7) zur Führung der schwingende Teile (5) hält, während die untere Platte (19) zwei Kugellagerungen (21) umfasst, um die beiden Bewegungsübertragungseinrichtungen (11), welche jede einen Lagerzapfen (21) zum rotatorischen Eingreifen in die entsprechende Kugellagerung (21) umfasst, rotatorisch zu führen, dass der radiale Hebel (12), den jede Übertragungseinrichtung (11) umfasst, am entsprechenden Lagerzapfen (22) befestigt ist, und dass die Antriebswelle (9) in das Gehäuse eindringt und in diesem ein Antriebszahnrad (23) hält, welches mit zwei Zahnrädern (24) in Eingriff ist, die jeweils mit zwei Bewegungsübertragungseinrichtungen, insbesondere deren radialen Hebeln (12) gekoppelt sind.

11. Handgeführtes Gerät nach Anspruch 9 oder Anspruch 10, **dadurch gekennzeichnet, dass** die Zahnräder (23), (24) derart miteinander verzahnt sind, dass die Bewegungen der schwingenden Teile (5) zueinander einen Phasenversatz von 180° aufweisen.

12. Handgeführtes Gerät nach Anspruch 10 oder Anspruch 11, **dadurch gekennzeichnet, dass** jedes schwingende Teil (5) ein Ansatzstück (6) aufweist und das Ansatzstück einen radialen Stift (25) aufweist, der zwischen zwei an der oberen Platte (18) befestigten vertikalen Fingern (26) eingreift.

13. Handgeführtes Gerät nach einem der vorstehenden Ansprüche, **dadurch gekennzeichnet, dass** die Schlagteile (31) zueinander parallel sind.

14. Handgeführtes Gerät nach einem der Ansprüche 1 bis 12, **dadurch gekennzeichnet, dass** die Schlagteile (31) derart auf dem Haltekörper (30) befestigt sind, dass sie zu diesem hin zusammenlaufen und die zu schüttelnde Pflanzenmasse so nahe wie möglich an das Kugelgelenk (7) bringen.

15. Handgeführtes Gerät nach dem vorstehenden Anspruch, **dadurch gekennzeichnet, dass** jedes Schlagteil (31) gegenüber jedem der anderen Schlagteile (31) eine nicht-parallele Position einnimmt.

16. Handgeführtes Gerät nach Anspruch 14 oder Anspruch 15, **dadurch gekennzeichnet, dass** die distalen Enden der Schlagteile (31) von den außenseitigen Schlagteilen zu den zentralen Schlagteilen hin gemäß abnehmenden Höhenniveaus angeordnet sind.

17. Handgeführtes Gerät nach einem der vorstehenden Ansprüche, **dadurch gekennzeichnet, dass** der Haltekörper (30) zwei Reihen von Schlagteilen (31) trägt, wobei die zwei Reihen von Schlagteilen entsprechend zweier durch die Längsachsen (BB') der Schlagteile gebildeten, sich schneidenden Ebenen angeordnet sind, welche miteinander einen spitzen Winkel bilden.

18. Handgeführtes Gerät nach dem vorstehenden Anspruch, **dadurch gekennzeichnet, dass** die erste Reihe aus Schlagteilen (31) mit einer größeren Länge als die der Schlagteile (31) der zweiten Reihe gebildet ist.

19. Handgeführtes Gerät nach den Ansprüchen 16 und 17 zusammengenommen, **dadurch gekennzeichnet, dass** die distalen Enden der Schlagteile (31) der ersten Reihe von den außenseitigen Schlagteilen zu den zentralen Schlagteilen hin gemäß abnehmenden Höhenniveau angeordnet sind.

20. Handgeführtes Gerät nach dem vorstehenden Anspruch, **dadurch gekennzeichnet, dass** die distalen Enden der Schlagteile (31) der zweiten Reihe gemäß eines gleichen Höhenniveau angeordnet sind.

21. Handgeführtes Gerät nach einem der Ansprüche 17 bis 20, **dadurch gekennzeichnet, dass** die Schlagteile (31) jeder Reihe gegenüber den die Schlagteile (31) der anderen Reihe trennenden Zwischenräumen angeordnet sind.

22. Handgeführtes Gerät nach einem der vorstehenden Ansprüche, **dadurch gekennzeichnet, dass** jedes Schlagteil (31) ein Ansatzstück (34) umfasst, das dessen proximalen Bereich einfasst, durch welches es in einer entsprechenden Bohrung (33) befestigt ist, die im Haltekörper (31) eingebracht ist.

23. Handgeführtes Gerät nach dem vorstehenden Anspruch, **dadurch gekennzeichnet, dass** jedes Ansatzstück (34) einen zylindrischen, glatten Haltebereich aufweist, über den es kraftschlüssig in der entsprechenden Bohrung (33) angreift.

24. Handgeführtes Gerät nach Anspruch 22, **dadurch gekennzeichnet, dass** jedes Ansatzstück (14) einen konischen, mit einem Außengewinde versehenen Haltebereich aufweist, über den es durch Verschraubung in der entsprechenden Bohrung (33) angreift, welche mit einem Innengewinde versehen ist.

25. Handgeführtes Gerät nach dem vorstehenden Anspruch, **dadurch gekennzeichnet, dass** der Wegverlauf jedes Schlagteils (31) den Wegverlauf des mindestens einen an es angrenzenden Schlagteils (31) teilweise überdeckt.

26. Handgeführtes Gerät nach einem der vorstehenden Ansprüche, **dadurch gekennzeichnet, dass** mindestens eines der Schlagteile (31) zu einer konischen Pendelbewegung mit elliptischer Basis angeregt wird.

27. Handgeführtes Gerät nach einem der vorstehenden Ansprüche, **dadurch gekennzeichnet, dass** das schwingende Teil (5) ein Befestigungsteil (50) aufweist und die Schlageinrichtung (3) durch iheren Haltekörper (30) an diesem Befestigungsteil derart befestigt ist, dass dessen Neigung in bezug auf eine geometrischen Achse (AA') eingestellt werden kann, welche dem schwingenden Teil (5) eigen ist und durch die geometrische Mitte des Kugelgelenks (7) verlä uft.

28. Handgeführtes Gerät nach einem der vorstehenden Ansprüche, **dadurch gekennzeichnet, dass** der Haltekörper (30) die Form eines länglichen Umlaufkörpers hat.

29. Handgeführtes Gerät nach dem vorstehenden Anspruch, **dadurch gekennzeichnet, dass** der Haltekörper (30) einen zentralen, zylindrischen Bereich zur Befestigung an das schwingende Teil 5 aufweist, welcher eine Klemmbackenverbindungseinrichtung (50) zur befestigenden Aufnahme des Haltekörpers (30) aufweist, wobei die Klemmbackenverbindungseinrichtung (50) aus zwei Klemmbacken gebildet ist, von denen die erste am schwingenden Teil (5) befestigt ist und die zweite beweglich ist und an der ersten Klemmbacke durch Verschraubung befestigt ist.

30. Handgeführtes Gerät nach dem vorstehenden Anspruch, **dadurch gekennzeichnet, dass** der Haltekörper (30) in seinem Zentralbereich mindestens einen länglichen Vertiefungseindruck (32) hat, der parallel zur Längsachse des Haltekörper (30) ist, und dass dieser Vertiefungseindruck (32) zur Aufnahme eines Zapfens ausgelegt ist, welcher einen Vorsprung in der zweiten Klemmbacke bildet.

31. Handgeführtes Gerät nach dem vorstehenden Anspruch, **dadurch gekennzeichnet, dass** der Haltekörper (30) in seinem Zentralbereich zwei parallele Vertiefungseindrücke (32) hat, die zwei unterschiedliche Winkelpositionen der Schlageinrichtung (3) in bezug auf das schwingende Teil (5) bestimmen.

32. Handgeführtes Gerät nach dem vorstehenden Anspruch, **dadurch gekennzeichnet, dass** der Haltekörper (30) in seinem Zentralbereich ein Schlagteil (31) umfasst und dass die zweite Klemmbacke mit einer länglichen, durchgehenden Öffnung (56) versehen ist, die entlang einer Ebene gebildet ist, welche senkrecht zur Drehachse des Haltekörpers steht, wobei die Breite der Öffnung (56) größer als der Durchmesser des Schlagteils (31) ist und die Öffnung (31) zwei einen winkelmäßigen Abstand voneinander aufweisende Anschlagpositionen bestimmt.

33. Handgeführtes Gerät nach einem der Ansprüche 1 bis 27, **dadurch gekennzeichnet, dass** der Haltekörper (30) die Form einer Platte hat.
